(19) Europäisches Patentamt

European Patent Office

Office européen des brevets

(11) **EP 1 570 433 B1**

(12) **FASCICULE DE BREVET EUROPEEN**

(45) Date de publication et mention
de la délivrance du brevet:
**17.05.2006 Bulletin 2006/20**

(21) Numéro de dépôt: **03809759.8**

(22) Date de dépôt: **14.10.2003**

(51) Int Cl.:
*G06T 7/00* [(2006.01)]    *G06T 5/00* [(2006.01)]

(86) Numéro de dépôt international:
**PCT/EP2003/050717**

(87) Numéro de publication internationale:
**WO 2004/040516 (13.05.2004 Gazette 2004/20)**

(54) **DISPOSITIF DE TRAITEMENT D'IMAGES A RECONNAISSANCE ET SELECTION DE SOURCES DE LUMIERE**

BILDVERARBEITUNGSEINRICHTUNG MIT ERKENNUNG UND AUSWAHL VON LICHTQUELLEN

IMAGE PROCESSING DEVICE WITH RECOGNITION AND SELECTION OF LIGHT SOURCES

(84) Etats contractants désignés:
**DE GB**

(30) Priorité: **29.10.2002 FR 0213540**

(43) Date de publication de la demande:
**07.09.2005 Bulletin 2005/36**

(73) Titulaire: **Thales**
**92200 Neuilly Sur Seine (FR)**

(72) Inventeurs:
  • **ROLS, Olivier**
    **THALES Intellectual Property**
    **94117 Arcueil (FR)**
  • **BRETON, Pierre-Albert**
    **THALES Intellectual Property**
    **94117 Arcueil (FR)**

(74) Mandataire: **Esselin, Sophie et al**
    **Marks & Clerk France**
    **31-33 Avenue Aristide Briand**
    **94117 Arcueil Cedex (FR)**

(56) Documents cités:
    **EP-A- 0 604 245**        **US-B1- 6 232 602**

• **ROBERTS B ET AL: "Image processing for flight crew enhanced situation awareness" SENSING, IMAGING, AND VISION FOR CONTROL AND GUIDANCE OF AEROSPACE VEHICLES, ORLANDO, FL, USA, 4-5 APRIL 1994, vol. 2220, pages 246-255, XP009010875 Proceedings of the SPIE - The International Society for Optical Engineering, 1994, USA ISSN: 0277-786X**
• **DICKMANNS E D ET AL: "Experimental results in autonomous landing approaches by dynamic machine vision" SENSING, IMAGING, AND VISION FOR CONTROL AND GUIDANCE OF AEROSPACE VEHICLES, ORLANDO, FL, USA, 4-5 APRIL 1994, vol. 2220, pages 304-313, XP009010866 Proceedings of the SPIE - The International Society for Optical Engineering, 1994, USA ISSN: 0277-786X**
• **LE GUILLOUX Y ET AL: "Using image sensors for navigation and guidance of aerial vehicles" SENSING, IMAGING, AND VISION FOR CONTROL AND GUIDANCE OF AEROSPACE VEHICLES, ORLANDO, FL, USA, 4-5 APRIL 1994, vol. 2220, pages 157-168, XP009010873 Proceedings of the SPIE - The International Society for Optical Engineering, 1994, USA ISSN: 0277-786X**
• **OAKLEY J P ET AL: "IMPROVING IMAGE QUALITY IN POOR VISIBILITY CONDITIONS USING A PHYSICAL MODEL FOR CONTRAST DEGRADATION" IEEE TRANSACTIONS ON IMAGE PROCESSING, IEEE INC. NEW YORK, US, vol. 7, no. 2, 1 février 1998 (1998-02-01), pages 167-179, XP000730982 ISSN: 1057-7149**

**Description**

Le domaine de l'invention est celui des dispositifs de traitement d'images permettant d'identifier, de traiter et de sélectionner des représentations de sources de lumière discrètes présentes dans une image vidéo composée de pixels. L'objet de ces dispositifs est la présentation, en temps réel, à un utilisateur d'une image traitée permettant une meilleure reconnaissance de représentations de sources de lumière faiblement contrastées.

L'aéronautique constitue un domaine privilégié d'application de ce type de dispositif dans les systèmes dits EVS (Enhanced Vision System) en apportant une aide efficace à l'atterrissage en conditions de visibilité dégradée, notamment par temps de brouillard. En effet, pour atterrir, il est vital que le pilote ou le système d'aide à l'atterrissage connaisse la position latérale de l'appareil par rapport à la trajectoire idéale amenant l'appareil dans l'axe de la piste.

Historiquement, en vol à vue et par temps clair, le pilote estimait la position de son appareil par rapport aux bords de la piste. L'introduction de feux aéroportuaires de structure codifiée constitués de lampes de piste de grande intensité a permis au pilote d'assurer cette tâche y compris en vol de nuit ou en conditions de brouillard léger. Lorsque les conditions météorologiques se dégradent encore, par exemple en conditions de brouillard sévère avec une visibilité inférieure à 200 mètres, ces systèmes ne suffisent plus.

Depuis 1970, on utilise le système ILS (Instrument Landing System) qui, à l'aide de deux faisceaux radiofréquence fixes, fournit au pilote et au pilote automatique l'information de position latérale nécessaire. Aujourd'hui, de nouveaux systèmes sont envisagés, comme le MLS (Microwave Landing System) dérivé de l'ILS mais permettant une plus grande variété d'approches, ou des systèmes à base de GPS (Global Positioning System) ou d'hybridation GPS/ Centrale Inertielle. La contrainte commune de ces différents systèmes est la nécessité d'installer des équipements supplémentaires au sol et à bord de l'appareil pour atteindre la précision de positionnement nécessaire. Les autorités de certification exigent, en effet, une précision qui est typiquement de l'ordre de 3 mètres. Ces installations (station GPS différentiel, émetteur MLS,...) entraînent des coûts d'acquisition et de maintenance supplémentaires qui peuvent être très importants pour certaines infrastructures aéroportuaires légères dédiées, par exemple, aux avions régionaux et d'affaire ou aux appareils de transport militaire.

US-B1-6 232 602 décrit un système de vision améliorée ("enhanced vision system") utilisant deux capteurs infra-rouge à différentes longueurs d'onde pour la détection des lumières électriques et du fond. Les deux images ainsi captés sont fusionnés dans une seule image qui est affichée aux pilotes. Pendant la fusion d'images les lumières électriques sont déterminées en utilisant une opération de maximum local.

Roberts et al.: "Image processing for flight crew enhanced situation awareness" Sensing, Imaging, and Vision for Control and Guidance of Aerospace Vehicles, Orlando, FL, USA, 4-5 Avril 1994, vol. 2220, pages 246-255, Proceedings of the SPIE, 1994 décrit des méthodes d'élaboration et d'amélioration d'image pour assister les pilotes dans situations dangereuses.

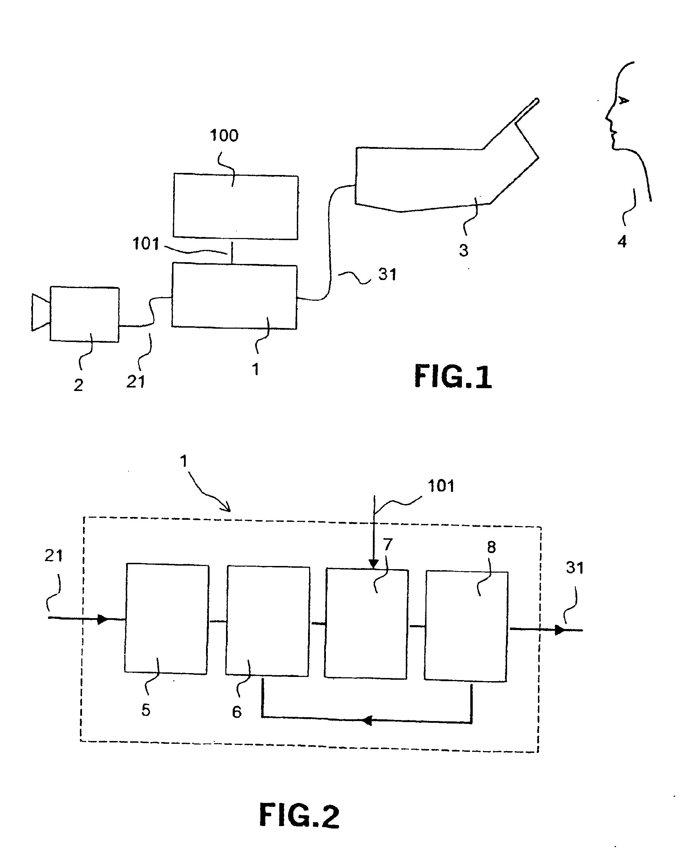

Les aides à l'atterrissage manuel dits EVS (Enhanced Vision System) permettent de pallier l'absence de systèmes radiofréquence d'aide à l'approche. La figure 1 représente le schéma général d'une chaîne EVS. Elle comprend un capteur d'images 2, un dispositif de traitement d'images 1 et un dispositif de visualisation 3. Un observateur 4 regarde l'image finale à travers ledit dispositif 3. Une unité électronique 100 spécialisée fournissant la position et l'attitude de l'aéronef est interfacée avec l'unité de traitement d'images 1. Des liaisons 21, 31 et 101 relient les différentes composantes du système. Le capteur 2 fournit une image dans une bande spectrale adaptée aux sources lumineuses à détecter. Il s'agit généralement d'un FLIR (Forward Looking Infra Red). Dans le cas de lampés de pistes ayant leur pic d'émission autour de 1 micron, la bande spectrale de sensibilité du capteur se situe donc dans le proche infrarouge, à la limite du spectre visible. L'unité 100 permet de comparer l'évolution des paramètres de l'image avec les déplacements réels de l'aéronef. Le dispositif de visualisation est classiquement un viseur Tête Haute, permettant d'afficher l'image finale fournie par le dispositif de traitement 1 en superposition sur l'extérieur, cette disposition permet de projeter l'image des lampes de piste estimées dans les directions même des dites lampes, le pilote connaît ainsi sa position par rapport à la trajectoire idéale d'atterrissage.

Ce premier imageur peut être utilement complété par un second imageur FLIR travaillant dans une seconde bande infrarouge comprise, par exemple, entre 8 et 12 microns. Ce second imageur fournit alors une image thermique de la zone d'atterrissage.

Deux paramètres permettent de juger de la qualité du dispositif de traitement. Ce sont d'une part, le pourcentage de lampes de piste identifiées et d'autre part le pourcentage d'artefacts ne correspondant pas à des lampes de piste réelles.

Les principales difficultés du traitement d'image sont que celui-ci doit travailler en temps réel afin que le pilote perçoive une image correspondant à la réalité sans décalage temporel significatif, ce qui exclut tout traitement sophistiqué de l'image, et d'autre part, le traitement doit conserver ses performances pour des images, par nature, variables.

Le dispositif de traitement d'images selon l'invention permet de pallier ces différents inconvénients. Le coeur de l'invention repose sur trois principes :

- Les traitements d'images principaux ne sont effectués que sur un petit nombre de pixels dont le niveau est supérieur à un seuil ;
- Un estimateur de vraisemblance évalue la probabilité d'existence de représentations de sources de lumière dans l'image ;
- Le seuil est variable en fonction d'un certain nombre de paramètres de l'image.

Plus précisément, l'invention a pour objet un dispositif électronique de traitement d'image générant à partir d'une image d'entrée une image de sortie, les deux images étant composées de pixels, l'image d'entrée provenant d'un premier capteur vidéo et représentative d'une scène contenant au moins une source de lumière discrète, ladite image d'entrée contenant une première représentation de ladite source de lumière discrète, l'image de sortie comportant une seconde représentation de ladite source de lumière discrète, caractérisé en ce que ledit dispositif comprend au moins :

- une unité électronique d'amélioration du contraste permettant de fournir à partir de l'image d'entrée une image à meilleur contraste ;
- une unité électronique de sélection permettant de fournir à partir de l'image à meilleur contraste une image filtrée ne contenant plus qu'au moins un premier ensemble de pixels dont le niveau électronique est situé au-dessus d'un premier seuil, ledit premier ensemble correspondant à la représentation d'au moins une source de lumière potentielle ;
- une unité d'estimation électronique de vraisemblance, permettant de fournir à partir du premier ensemble de pixels de l'image filtrée une image estimée comportant un second ensemble de pixels, ledit second ensemble correspondant à la représentation des sources de lumière estimées, les répartitions des pixels des représentations des sources estimées correspondant à des fonctions mathématiques bidimensionnelles , à chaque représentation de source de lumière estimée étant associé une probabilité de vraisemblance ;
- une unité électronique de validation fournissant à partir de l'image estimée l'image finale, ladite image contenant une représentation de source de lumière estimée si la probabilité de vraisemblance associée est supérieure à un second seuil.

Avantageusement, le niveau du premier seuil dépend au moins de ladite unité de validation.
Avantageusement, ladite fonction électronique d'amélioration du contraste de l'image d'entrée initiale comprend au moins un filtre matriciel de type CBF (contrast box filter) appliqué sur chaque niveau de pixel de l'image d'entrée initiale pour obtenir l'image d'entrée contrastée. La dite matrice est notamment une matrice carrée de M lignes et de M colonnes d'éléments, N éléments centraux ayant une même première valeur, les $(M^2 - N)$ autres éléments de la matrice ayant une même seconde valeur égale à ladite première valeur multipliée par $N/(N - M^2)$.
Les principales fonctions de l'estimateur sont:

- La fonction électronique de reconnaissance de forme de la représentation des sources de lumière,
- La fonction électronique de reconnaissance de la disposition géométrique desdites représentations desdites sources,
- La fonction électronique d'estimation de déplacement desdites représentations desdites sources

La fonction électronique de reconnaissance de forme de la représentation de la source de lumière permet :

- de comparer les niveaux des pixels du premier ensemble de l'image filtrée à des niveaux calculés, issus de fonctions mathématiques pré-déterminées
- de fournir une probabilité de présence de la représentation de la source de lumière estimée dans l'image d'entrée.

Avantageusement, les fonctions mathématiques pré-déterminées sont des gaussiennes bi-dimensionnelles et la fonction de reconnaissance se fait par application de la méthode des moindres carrés entre les niveaux des pixels du premier ensemble et les niveaux calculés.
La fonction électronique de reconnaissance de la disposition géométrique desdites représentations des sources fournit une probabilité d'alignement desdites représentations des sources de lumière dans l'image d'entrée. Lorsque les représentations des sources potentielles sont alignées selon au moins une droite, la fonction électronique de reconnaissance comporte au moins une fonction permettant de faire une transformée de radon sur les pixels de l'image filtrée.
Lorsque les représentations des sources sont mobiles dans l'image d'entrée, l'estimateur électronique de vraisemblance comporte au moins une fonction électronique de modèle de déplacement des représentations des sources estimées, Il comporte également au moins une fonction électronique d'estimation de déplacement permettant, à partir de la fonction électronique de modèle de déplacement des représentations des sources estimées :

- pour chaque représentation de source de lumière estimée d'une première image estimée occupant une première position, de calculer le déplacement théorique de ladite première position ;

- de calculer une seconde position occupée par ladite représentation de source de lumière estimée dans une seconde image estimée ;
- de comparer ladite seconde position avec la position réelle de ladite représentation de source de lumière dans ladite seconde image estimée.
- de fournir une probabilité de déplacement de la représentation de la source dans l'image estimée.

Avantageusement, la probabilité de vraisemblance d'une représentation de source de lumière estimée fournie par l'unité électronique de validation est égale au produit des probabilités de présence, d'alignement et de déplacement de la dite représentation de source de lumière fournies par l'unité électronique d'estimation. L'unité électronique de validation calcule un taux de rejet de l'image d'entrée égal au pourcentage de représentations de sources estimées dont la probabilité de vraisemblance est située au-dessus du second seuil sur le nombre total de représentations de sources estimées.

Avantageusement, le dispositif comporte une unité électronique d'histogramme permettant de réaliser l'histogramme des pixels de l'image à meilleur contraste, ledit histogramme comportant pour chaque niveau de pixel le nombre de pixels correspondant. Ladite unité électronique d'histogramme comporte une fonction permettant de déterminer un troisième seuil, le niveau dudit troisième seuil étant situé au-dessus du niveau moyen des pixels de l'image filtrée et en dessous du niveau moyen des pixels des représentations des sources de lumière potentielles. Avantageusement, l'histogramme étant représenté sous forme d'un graphe ayant en abscisse le niveau des pixels et en ordonnée le nombre de pixels correspondant à ce niveau, le niveau du troisième seuil correspond au niveau qui se trouve à la distance la plus grande de la droite passant par les maxima en abscisse et en ordonnée de ce graphe.

Avantageusement, le dispositif comporte une unité électronique appelée filtre récursif qui détermine pour une seconde image d'entrée successive à une première image d'entrée, la valeur du premier seuil à appliquer à cette seconde image, la valeur dudit premier seuil de cette seconde image dépendant au moins de la valeur du premier seuil, du troisième seuil et du taux de rejet de la première image d'entrée.

Dans un mode principal d'application, l'image finale est projetée dans un dispositif de visualisation en superposition avec une image provenant d'un second capteur. Préférentiellement, le premier capteur est sensible dans le proche infrarouge dans la bande de 1 à 2 microns et le second capteur est sensible dans le moyen infrarouge dans la bande de 5 à 20 microns.

Avantageusement, le dispositif est intégré à un système de visualisation comportant au moins un capteur vidéo, le dispositif électronique de traitement d'image et un dispositif de visualisation, des moyens de localisation de la position et de l'orientation du capteur vidéo dans l'espace, lesdits moyens de localisation étant interfacés avec ledit dispositif de traitement, ledit système pouvant être rendu mobile, par exemple en étant monté sur un véhicule.

Le domaine aéronautique constitue une application privilégiée de ce type de dispositif. Dans ce cadre, le véhicule est un aéronef et les sources de lumière sont des lampes de piste d'atterrissage, le premier capteur est sensible dans le proche infrarouge dans la bande de 1 à 2 microns et le second capteur est sensible dans le moyen infrarouge dans la bande de 5 à 20 microns.

L'invention sera mieux comprise et d'autres avantages apparaîtront à la lecture de la description qui va suivre donnée à titre non limitatif et grâce aux figures annexées parmi lesquelles :

- la figure 1 représente le schéma général d'une chaîne d'acquisition, de traitement et de présentation d'images ;
- la figure 2 représente une vue de principe du dispositif de traitement selon l'invention ;
- la figure 3 représente une vue de principe détaillée du dispositif de traitement selon l'invention;
- la figure 4 représente le principe de la détermination du troisième seuil dans le graphe de l'histogramme des niveaux de pixels.

La figure 2 représente une vue de principe du dispositif de traitement selon l'invention. Il comprend essentiellement quatre unités électroniques qui sont :

- une unité électronique d'amélioration du contraste 5 permettant de fournir à partir de l'image d'entrée une image à meilleur contraste ;
- une unité électronique de sélection 6 permettant de fournir à partir de l'image à meilleur contraste une image filtrée ;
- une unité d'estimation électronique de vraisemblance 7, permettant de fournir à partir de l'image filtrée une image estimée;
- une unité électronique de validation 8 fournissant à partir de l'image estimée l'image finale.

L'unité 5 est interconnectée avec le capteur 2 au moyen de la liaison 21. L'unité 7 est interconnectée avec le dispositif 100 au moyen de la liaison 101. L'unité 8 est interconnectée avec le dispositif de visualisation 3 au moyen de la liaison 31.

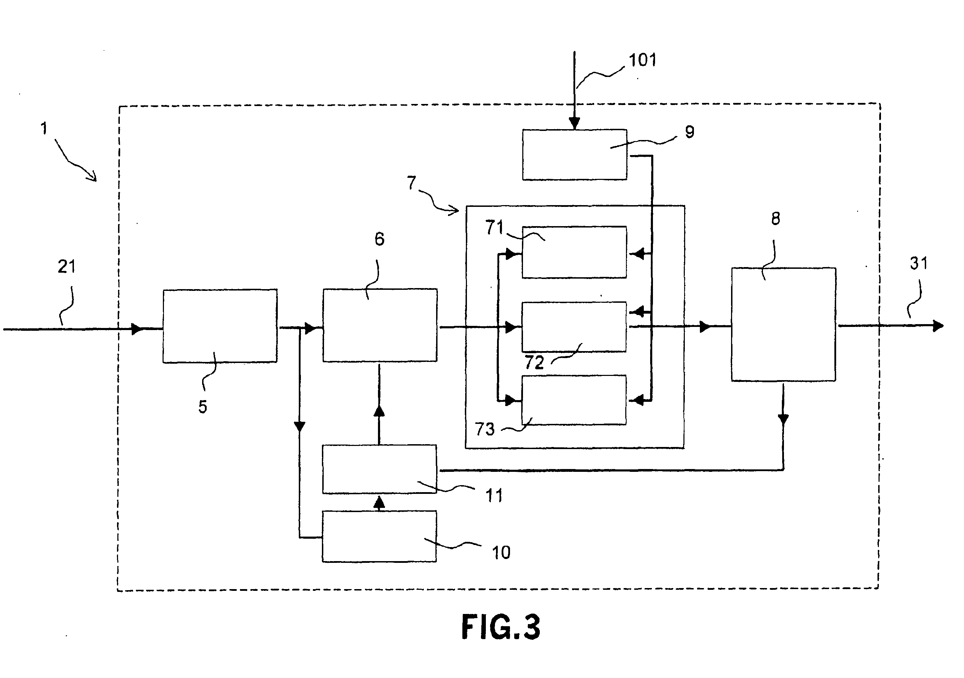

La figure 3 représente une vue détaillée du principe du dispositif de la figure 2. Certaines unités électroniques sont détaillées, des unités complémentaires sont ajoutées.

Sur les deux figures 2 et 3, les flèches indiquent les interconnexions entre les différentes unités ainsi que le sens de leur échange de données.

L'unité électronique d'amélioration de contraste permet d'augmenter le contraste de l'image. Différentes méthodes existent. Une façon simple d'obtenir cet effet est d'utiliser un filtre matriciel de type CBF (contrast box filter) appliqué sur chaque niveau de pixel de l'image d'entrée initiale pour obtenir l'image d'entrée contrastée. La matrice de ce filtre est une matrice carrée de M lignes et de M colonnes d'éléments, les N éléments centraux ayant une même première valeur, les $(M^2 - N)$ autres éléments de la matrice ayant une même seconde valeur égale à ladite première valeur multipliée par $N/(N - M^2)$. A un pixel donné P de l'image d'entrée ayant un certain niveau, on obtient le niveau du pixel correspondant dans l'image à meilleur contraste en faisant les opérations suivantes :

• Multiplication des valeurs des $M^2$ pixels entourant le pixel P par les valeurs des éléments correspondants de la matrice du filtre, la matrice étant centrée sur le pixel P ;
• Sommation des $M^2$ valeurs obtenues pour obtenir la valeur du pixel de l'image à meilleur contraste.

A titre d'exemple, une matrice typique comporte 7 lignes et 7 colonnes, soit au total 49 éléments, les 9 éléments centraux valent par exemple 1 et les 40 autres éléments valent alors - 9/40. La matrice résultante du filtre est représentée ci-dessous:

$$
\begin{pmatrix}
-9/40 & -9/40 & -9/40 & -9/40 & -9/40 & -9/40 & -9/40 \\
-9/40 & -9/40 & -9/40 & -9/40 & -9/40 & -9/40 & -9/40 \\
-9/40 & -9/40 & 1 & 1 & 1 & -9/40 & -9/40 \\
-9/40 & -9/40 & 1 & 1 & 1 & -9/40 & -9/40 \\
-9/40 & -9/40 & 1 & 1 & 1 & -9/40 & -9/40 \\
-9/40 & -9/40 & -9/40 & -9/40 & -9/40 & -9/40 & -9/40 \\
-9/40 & -9/40 & -9/40 & -9/40 & -9/40 & -9/40 & -9/40
\end{pmatrix}
$$

L'unité électronique de sélection 6 conserve les pixels de l'image à meilleur contraste dont le niveau est situé au-dessus d'un premier seuil, le niveau des autres pixels étant ramené à 0. L'image filtrée ne contient alors plus qu'un premier ensemble de pixels correspondant à des sources de lumière potentielles.

L'unité électronique de vraisemblance peut comporter trois unités comme il est indiqué en figure 3.

La première de ces unités 71 a pour objet la reconnaissance de la forme des sources de lumière. Dans le cas général, les sources étant situées à grande distance du capteur d'images, leurs représentations devraient apparaître comme des ensembles lumineux de petite dimension, couvrant au plus quelques pixels. Une bonne représentation mathématique de la répartition de l'énergie de la représentation de la source, dans ce cas, est une gaussienne bidimensionnelle. L'unité chargée de l'identification des représentations des sources potentielles compare les niveaux des répartitions de pixels de l'image filtrée à ceux d'une représentation gaussienne bidimensionnelle en faisant varier quatre paramètres: le niveau de la gaussienne, sa largeur à mi-hauteur selon un premier axe, sa largeur à mi-hauteur selon un second axe perpendiculaire au premier, l'inclinaison du premier axe dans le repère de l'image. La comparaison se fait par l'application de la méthode des moindres carrés entre les niveaux des pixels du premier ensemble et les niveaux calculés de la gaussienne. L'erreur résiduelle de la méthode d'optimisation permet d'estimer la probabilité de présence d'une représentation de source. Lorsque cette probabilité est supérieure à un certain seuil, la représentation de la source potentielle est remplacée dans l'image estimée par sa représentation gaussienne. Il est à noter que cette méthode permet de déterminer la position des représentations des sources avec une précision inférieure au pixel.

La seconde de ces unités 72 a pour objet la reconnaissance de la disposition géométrique des représentations des sources. En application aéronautique, les lampes de piste sont disposées selon des structures géométriques codifiées représentatives des axes de piste qui sont des droites ou des segments de droite. La seconde unité permet de rechercher la présence de telles structures dans l'image filtrée. La fonction mathématique utilisée est une transformée de radon. Son principe consiste à rechercher dans l'image les directions privilégiées où l'énergie moyenne des pixels est importante et peut par conséquent correspondre à des axes d'alignement de sources de lumière.

La troisième de ces unités 73 a pour objet de fournir une probabilité de déplacement des représentations des sources de lumière. Ladite unité spécialisée est utilisée soit lorsque les sources présentes dans la scène se déplacent de façon connue, soit lorsque le dispositif se trouve sur un véhicule en mouvement et lorsque les déplacements et l'orientation du véhicule sont connus, ce qui est le cas pour les aéronefs. Elle a comme données d'entrée, d'une part, la connaissance des positions initiales des représentations des sources estimées dans une première image filtrée et d'autre part, les informations d'une unité électronique fournissant un modèle de déplacement 9. Pour un véhicule en mouvement, ce modèle est interfacé avec les moyens 100 de localisation du véhicule. Elle calcule les secondes positions occupées par lesdites représentations des sources de lumière estimées dans une seconde image d'entrée. Elle compare lesdites secondes positions avec les positions réelles desdites représentations des sources de lumière dans la seconde image d'entrée. Elle fournit alors une probabilité de déplacement des représentations des sources.

L'unité 8 assure les tâches suivantes :

- Calculer la probabilité de vraisemblance d'une représentation de source de lumière estimée qui est égale au produit des probabilités de présence, d'alignement et de déplacement de la dite source de lumière fournies par les unités électroniques d'estimation 71, 72 et 73.
- Eliminer de l'image estimée les représentations des sources estimées dont la probabilité de vraisemblance est située en dessous du second seuil. Le second seuil vaut environ 95% pour réaliser l'image finale, ladite image finale étant fournie au dispositif de visualisation 3.
- Calculer un taux de rejet de l'image d'entrée égal au pourcentage de représentations de sources présentes dans l'image finale sur le nombre total de représentations de sources présentes dans l'image estimée.
- Fournir à l'unité 6 le taux de rejet calculé.

Lorsque le taux de rejet est faible, cela signifie que toutes les représentations de sources estimées correspondent à des sources réelles présentes dans la scène et par conséquent, le niveau du premier seuil est trop important. Lorsque le taux de rejet est important, il est nécessaire, au contraire de relever le niveau de seuil qui est trop faible.

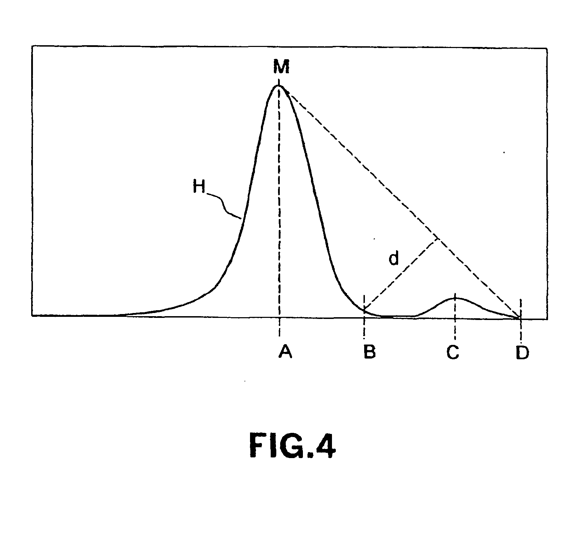

Sur la figure 3, figurent deux unités électroniques supplémentaires. L'unité 10 est une unité permettant de réaliser l'histogramme des pixels de l'image à meilleur contraste, le graphe de l'histogramme H représenté en figure 4 comporte en abscisse le niveau des pixels et en ordonnée le nombre de pixels correspondant à ce niveau. Ladite unité électronique d'histogramme comporte une fonction permettant de déterminer un troisième seuil B, le niveau dudit troisième seuil étant situé au-dessus du niveau moyen A des pixels de l'image contrastée et en dessous du niveau moyen C des pixels des représentations des sources de lumière potentielles. Le niveau du troisième seuil B correspond au niveau qui se trouve à la distance d la plus grande de la droite MD passant par les maxima en abscisse D et en ordonnée M du graphe de l'histogramme H.

L'unité 11 appelé filtre récursif détermine pour une seconde image d'entrée successive à une première image d'entrée, la valeur du premier seuil à appliquer à cette seconde image, la valeur dudit premier seuil de cette seconde image dépendant au moins de la valeur du premier seuil, du troisième seuil et du taux de rejet de la première image d'entrée. Il comporte un filtre passe-bas de stabilisation du système permettant d'éviter les variations trop brutales de l'image finale. Sa fréquence de coupure est inférieure à 5 Hz.

L'ensemble des fonctions des unités électroniques peut être implémenté dans des composants électroniques comportant des matrices de portes logiques (ET ou OU). Ces composants peuvent être de type non programmables comme, par exemple, les ASIC (Application Specific Integrated Circuit) ; dans ce cas, les informations sont gravées au moment de la réalisation du circuit. Ces composants peuvent également être programmables comme, par exemple, les FPGA (Field Programmable Gate Array) ou EPLD (Erasable Programmable Logic Device). Ces composants sont couramment utilisés pour des applications d'électronique professionnelle ou embarquée sur aéronefs.

**Revendications**

1. Dispositif électronique de traitement d'image (1) générant à partir d'une image d'entrée une image de sortie, les deux images étant composées de pixels, l'image d'entrée provenant d'un premier capteur vidéo (2) et représentative d'une scène contenant au moins une source de lumière discrète, ladite image d'entrée contenant une première représentation de ladite source de lumière discrète, l'image de sortie comportant une seconde représentation de ladite source de lumière discrète, **caractérisé en ce que** ledit dispositif comprend au moins:

   • une unité électronique (5) d'amélioration du contraste permettant de fournir à partir de l'image d'entrée une image à meilleur contraste ;
   • une unité électronique (6) de sélection permettant de fournir à partir de l'image à meilleur contraste une image filtrée ne contenant plus qu'au moins un premier ensemble de pixels dont le niveau électronique est situé au-dessus d'un premier seuil, ledit premier ensemble correspondant à la représentation d'au moins une source de lumière potentielle ;

• une unité (7) d'estimation électronique de vraisemblance, permettant de fournir à partir du premier ensemble de pixels de l'image filtrée une image estimée comportant un second ensemble de pixels, ledit second ensemble correspondant à la représentation de sources de lumière estimées, les répartitions des pixels de la représentation des sources estimées correspondant à des fonctions mathématiques bidimensionnelles ; à chaque représentation de source de lumière estimée étant associé une probabilité de vraisemblance ;

• une unité électronique (8) de validation fournissant à partir de l'image estimée l'image finale, ladite image contenant une représentation de la source de lumière estimée si la probabilité de vraisemblance associée est supérieure à un second seuil.

2. Dispositif électronique de traitement d'image (1) selon la revendication 1, **caractérisé en ce que** le niveau du premier seuil dépend au moins de ladite unité de validation (8).

3. Dispositif électronique de traitement d'image selon les revendications 1 ou 2, **caractérisé en ce que** ladite fonction électronique d'amélioration du contraste de l'image d'entrée initiale comprend au moins un filtre matriciel de type CBF (contrast box filter) appliqué sur chaque niveau de pixel de l'image d'entrée initiale pour obtenir l'image d'entrée contrastée.

4. Dispositif électronique de traitement d'image selon la revendication 3, **caractérisé en ce que** la dite matrice est une matrice carrée de M lignes et de M colonnes d'éléments, les N éléments centraux ayant une même première valeur, les $(N - M^2)$ autres éléments de la matrice ayant une même seconde valeur égale à ladite première valeur multipliée par $N/(M^2-N)$.

5. Dispositif électronique de traitement d'image selon l'une des revendications précédentes, **caractérisé en ce que** l'estimateur électronique de vraisemblance (7) comporte au moins une fonction électronique (71) de reconnaissance de forme de la représentation de la source de lumière permettant :

   • de comparer les niveaux des pixels du premier ensemble de l'image filtrée à des niveaux calculés, issus de fonctions mathématiques pré-déterminées
   • de fournir une probabilité de présence de la représentation de la source de lumière estimée dans l'image d'entrée.

6. Dispositif électronique de traitement d'image selon la revendication 5, **caractérisé en ce que** les fonctions mathématiques pré-déterminées sont des gaussiennes bi-dimensionnelles.

7. Dispositif électronique de traitement d'image selon la revendication 6, **caractérisé en ce que** la fonction de reconnaissance se fait par applications de la méthode des moindres carrés entre les niveaux des pixels du premier ensemble et les niveaux calculés.

8. Dispositif électronique de traitement d'image selon l'une des revendications précédentes, **caractérisé en ce que**, l'image filtrée comportant au moins deux représentations de sources de lumière potentielles, l'estimateur électronique de vraisemblance comporte au moins une fonction électronique (72) de reconnaissance de la disposition géométrique desdites représentations, ladite fonction fournissant une probabilité d'alignement des dites représentations des sources de lumière dans l'image d'entrée.

9. Dispositif électronique de traitement d'image selon la revendication 8, **caractérisé en ce que** lorsque les représentations des sources potentielles sont alignées selon au moins une droite, la fonction électronique de reconnaissance comporte au moins une fonction permettant de faire une transformée de radon sur les pixels de l'image filtrée.

10. Dispositif électronique de traitement d'image selon l'une des revendications précédentes, **caractérisé en ce que**, les représentations des sources étant mobiles dans l'image d'entrée, l'estimateur électronique de vraisemblance comporte au moins une fonction électronique (9) de modèle de déplacement des représentations des sources estimées.

11. Dispositif électronique de traitement d'image selon la revendication 10, **caractérisé en ce que** l'estimateur électronique (7) de vraisemblance comporte au moins une fonction électronique (73) d'estimation de déplacement permettant, à partir de la fonction électronique de modèle de déplacement des représentations des sources estimées:

   • pour chaque représentation de source de lumière estimée d'une première image estimée occupant une première position, de calculer le déplacement théorique de ladite première position ;
• de calculer une seconde position occupée par ladite représentation de la source de lumière estimée dans une seconde image d'entrée ;
• de comparer ladite seconde position avec la position réelle de ladite représentation de la source de lumière dans ladite seconde image d'entrée.
• de fournir une probabilité de déplacement de la représentation de la source dans l'image d'entrée.

12. Dispositif électronique de traitement d'image selon l'une des revendications 4 à 11, **caractérisé en ce que**, la probabilité de vraisemblance de la représentation d'une source de lumière estimée fournie par l'unité électronique (8) de validation est égale au produit des probabilités de présence, d'alignement et de déplacement de la dite représentation de la source de lumière fournies par l'unité électronique d'estimation.

13. Dispositif électronique de traitement d'images selon l'une des revendications précédentes, **caractérisé en ce que** l'unité électronique (8) de validation calcule un taux de rejet de l'image d'entrée égal au pourcentage de représentations de sources estimées dont la probabilité de vraisemblance est située au-dessus du second seuil sur le nombre total de représentations de sources estimées.

14. Dispositif électronique de traitement d'image selon l'une des revendications précédentes, **caractérisé en ce que** lé dispositif comporte une unité électronique (10) d'histogramme permettant de réaliser l'histogramme des pixels de l'image à meilleur contraste, ledit histogramme fournissant le nombre de pixels correspondant à un niveau d'énergie donné.

15. Dispositif électronique de traitement d'images selon la revendication 14, **caractérisé en ce que** l'unité électronique (10) d'histogramme comporte une fonction permettant de déterminer un troisième seuil, le niveau dudit troisième seuil étant situé au-dessus du niveau moyen des pixels de l'image filtrée et en dessous du niveau moyen des pixels des représentations des sources de lumière potentielles.

16. Dispositif électronique de traitement d'images selon la revendication 15, **caractérisé en ce que**, l'histogramme étant représenté sous forme d'un graphe ayant en abscisse le niveau des pixels et en ordonnée le nombre de pixels correspondant à ce niveau, le niveau du troisième seuil correspond au niveau qui se trouve à la distance la plus grande de la droite passant par les maxima en abscisse et en ordonnée de l'histogramme.

17. Dispositif électronique de traitement d'image selon l'une des revendications précédentes, **caractérisé en ce que** le dispositif comporte une unité électronique (11) appelée filtre récursif qui détermine pour une seconde image d'entrée successive à une première image d'entrée, la valeur du premier seuil à appliquer à cette seconde image, la valeur dudit premier seuil dépendant au moins de la valeur du premier seuil, du troisième seuil et du taux de rejet de la première image d'entrée.

18. Dispositif de traitement d'image selon l'une des revendications précédentes, **caractérisée en ce que** l'image finale est projetée dans un système de visualisation (3) en superposition avec une image provenant d'un second capteur.

19. Dispositif de traitement d'image selon la revendication 18, **caractérisé en ce que** le premier capteur (2) est sensible dans le proche infrarouge dans la bande de 1 à 2 microns et le second capteur est sensible dans le moyen infrarouge dans la bande de 5 à 20 microns.

20. Système de visualisation comportant au moins un capteur vidéo (2), un dispositif électronique (1) de traitement d'image et un dispositif de visualisation (3), **caractérisé en ce que** ledit système possède des moyens de localisation de la position et de l'orientation du capteur vidéo dans l'espace, ledit traitement d'images étant selon l'une des revendications précédentes, lesdits moyens de localisation étant interfacés avec ledit dispositif (1), ledit système pouvant être rendu mobile.

21. Aéronef **caractérisé en ce qu'**il comporte un système de visualisation selon la revendication 20, le dispositif de visualisation étant un viseur dit tête Haute, les sources de lumière étant des lampes de piste d'atterrissage.

**Patentansprüche**

1. Elektronische Bildverarbeitungsvorrichtung (1), die ausgehend von einem Eingangsbild ein Ausgangsbild erzeugt, wobei die beiden Bilder aus Pixeln zusammengesetzt sind, wobei das Eingangsbild von einem ersten Videosensor (2) stammt und eine Szene darstellt, die mindestens eine diskrete Lichtquelle enthält, wobei das Eingangsbild eine erste Darstellung der diskreten Lichtquelle enthält, wobei das Ausgangsbild eine zweite Darstellung der diskreten Lichtquelle aufweist, **dadurch gekennzeichnet, dass** die Vorrichtung mindestens aufweist:

• eine elektronische Kontrastverbesserungseinheit (5), die es ermöglicht, ausgehend vom Eingangsbild ein Bild mit besserem Kontrast zu liefern;
• eine elektronische Auswahleinheit (6), die es ermöglicht, ausgehend vom Bild mit besserem Kontrast ein gefiltertes Bild zu liefern, das nur noch mindestens eine erste Einheit von Pixeln enthält, deren elektronischer Pegel sich oberhalb eines ersten Schwellwerts befindet, wobei die erste Einheit der Darstellung mindestens einer potentiellen Lichtquelle entspricht;
• eine elektronische Likelihood-Schätzungseinheit (7), die es ermöglicht, ausgehend von der ersten Einheit von Pixeln des gefilterten Bilds ein geschätztes Bild zu liefern, das eine zweite Einheit von Pixeln enthält, wobei die zweite Einheit der Darstellung von geschätzten Lichtquellen entspricht, wobei die Verteilungen der Pixel der Darstellung der geschätzten Quellen zweidimensionalen mathematischen Funktionen entsprechen; wobei jeder Darstellung einer geschätzten Lichtquelle eine Likelihood-Wahrscheinlichkeit zugeordnet ist;
• eine elektronische Validierungseinheit (8), die ausgehend vom geschätzten Bild das Endbild liefert, wobei das Bild eine Darstellung der geschätzten Lichtquelle enthält, wenn die zugeordnete Likelihood-Wahrscheinlichkeit größer als ein zweiter Schwellwert ist.

2. Elektronische Bildverarbeitungsvorrichtung (1) nach Anspruch 1, **dadurch gekennzeichnet, dass** der Pegel des ersten Schwellwerts mindestens von der Validierungseinheit (8) abhängt.

3. Elektronische Bildverarbeitungsvorrichtung nach den Ansprüchen 1 oder 2, **dadurch gekennzeichnet, dass** die elektronische Funktion der Verbesserung des Kontrasts des ursprünglichen Eingangsbilds mindestens ein Matrixfilter vom Typ CBF (Contrast Box Filter) aufweist, das auf jeden Pixelpegel des ursprünglichen Eingangsbilds angewendet wird, um das kontrastierte Eingangsbild zu erhalten.

4. Elektronische Bildverarbeitungsvorrichtung nach Anspruch 3, **dadurch gekennzeichnet, dass** die Matrix eine quadratische Matrix mit M Zeilen und M Spalten von Elementen ist, wobei die N zentralen Elemente den gleichen ersten Wert haben, während die $(N-M^2)$ anderen Elemente der Matrix den gleichen zweiten Wert gleich dem ersten Wert multipliziert mit $N/(M^2-N)$ haben.

5. Elektronische Bildverarbeitungsvorrichtung nach einem der vorhergehenden Ansprüche, **dadurch gekennzeichnet, dass** der elektronische Likelihood-Schätzer (7) mindestens eine elektronische Formerkennungsfunktion (71) der Darstellung der Lichtquelle aufweist, die es ermöglicht:

• die Pixelpegel der ersten Einheit des gefilterten Bilds mit berechneten Pegeln zu vergleichen, die von vorbestimmten mathematischen Funktionen stammen,
• eine Vorhandenseinswahrscheinlichkeit der Darstellung der geschätzten Lichtquelle im Eingangsbild zu liefern.

6. Elektronische Bildverarbeitungsvorrichtung nach Anspruch 5, **dadurch gekennzeichnet, dass** die vorbestimmten mathematischen Funktionen zweidimensionale Gaussfunktionen sind.

7. Elektronische Bildverarbeitungsvorrichtung nach Anspruch 6, **dadurch gekennzeichnet, dass** die Erkennungsfunktion durch Anwendungen des Verfahrens der kleinsten Fehlerquadrate zwischen den Pixelpegeln der ersten Einheit und den berechneten Pegeln erfolgt.

8. Elektronische Bildverarbeitungsvorrichtung nach einem der vorhergehenden Ansprüche, **dadurch gekennzeichnet, dass**, wenn das gefilterte Bild mindestens zwei Darstellungen von potentiellen Lichtquellen enthält, der elektronische Likelihood-Schätzer mindestens eine elektronische Funktion (72) der Erkennung der geometrischen Anordnung der Darstellungen aufweist, wobei die Funktion eine Ausrichtungswahrscheinlichkeit der Darstellungen der Lichtquellen im Eingangsbild liefert.

9. Elektronische Bildverarbeitungsvorrichtung nach Anspruch 8, **dadurch gekennzeichnet, dass**, wenn die Darstellungen der potentiellen Quellen gemäß mindestens einer Geraden ausgerichtet sind, die elektronische Erkennungsfunktion mindestens eine Funktion enthält, die es ermöglicht, an den Pixeln des gefilterten Bilds eine Radontransformierte auszuführen.

**10.** Elektronische Bildverarbeitungsvorrichtung nach einem der vorhergehenden Ansprüche, **dadurch gekennzeichnet, dass**, wenn die Darstellungen der Quellen im Eingangsbild beweglich sind, der elektronische Likelihood-Schätzer mindestens eine elektronische Funktion (9) eines Verschiebungsmodells der Darstellungen der geschätzten Quellen enthält.

**11.** Elektronische Bildverarbeitungsvorrichtung nach Anspruch 10, **dadurch gekennzeichnet, dass** der elektronische Likelihood-Schätzer (7) mindestens eine elektronische Funktion (73) der Verschiebungsschätzung enthält, die es ausgehend von der elektronischen Funktion des Verschiebungsmodells der Darstellungen der geschätzten Quellen ermöglicht:

• für jede Darstellung einer geschätzten Lichtquelle eines ersten geschätzten Bilds, die eine erste Position einnimmt, die theoretische Verschiebung der ersten Position zu berechnen;
• eine zweite von der Darstellung der geschätzten Lichtquelle in einem zweiten Eingangsbild eingenommene Position zu berechnen;
• die zweite Position mit der realen Position der Darstellung der Lichtquelle im zweiten Eingangsbild zu vergleichen;
• eine Verschiebungswahrscheinlichkeit der Darstellung der Quelle im Eingangsbild zu liefern.

**12.** Elektronische Bildverarbeitungsvorrichtung nach einem der Ansprüche 4 bis 11, **dadurch gekennzeichnet, dass** die Likelihood-Wahrscheinlichkeit der Darstellung einer geschätzten Lichtquelle, die von der elektronischen Validierungseinheit (8) geliefert wird, gleich dem Produkt der Vorhandenseins-, Ausrichtungs- und Verschiebungswahrscheinlichkeiten der Darstellung der Lichtquelle ist, die von der elektronischen Schätzungseinheit geliefert werden.

**13.** Elektronische Bildverarbeitungsvorrichtung nach einem der vorhergehenden Ansprüche, **dadurch gekennzeichnet, dass** die elektronische Validierungseinheit (8) eine Zurückweisungsrate des Eingangsbilds gleich dem Prozentsatz von Darstellungen geschätzter Quellen berechnet, deren Likelihood-Wahrscheinlichkeit sich oberhalb des zweiten Schwellwerts bezüglich der Gesamtzahl von Darstellungen geschätzte Quellen befindet.

**14.** Elektronische Bildverarbeitungsvorrichtung nach einem der vorhergehenden Ansprüche, **dadurch gekennzeichnet, dass** die Vorrichtung eine elektronische Histogrammeinheit (10) aufweist, die es ermöglicht, das Histogramm der Pixel des Bilds mit besserem Kontrast herzustellen, wobei das Histogramm die Anzahl von Pixeln liefert, die einem gegebenen Energiepegel entsprechen.

**15.** Elektronische Bildverarbeitungsvorrichtung nach Anspruch 14, **dadurch gekennzeichnet, dass** die elektronische Histogrammeinheit (10) eine Funktion aufweist, die es ermöglicht, einen dritten Schwellwert zu bestimmen, wobei der Pegel des dritten Schwellwerts sich oberhalb des mittleren Pegels der Pixel des gefilterten Bilds und unterhalb des mittleren Pegels der Pixel der Darstellungen der potentiellen Lichtquellen befindet.

**16.** Elektronische Bildverarbeitungsvorrichtung nach Anspruch 15, **dadurch gekennzeichnet, dass**, wenn das Histogramm in Form eines Graphen dargestellt ist, der in der Abszisse den Pegel der Pixel und in der Ordinate die Anzahl der diesem Pegel entsprechenden Pixeln angibt, der Pegel des dritten Schwellwerts dem Pegel entspricht, der sich in der größten Entfernung von der Geraden befindet, die durch die Höchstwerte in der Abszisse und in der Ordinate des Histogramms verläuft.

**17.** Elektronische Bildverarbeitungsvorrichtung nach einem der vorhergehenden Ansprüche, **dadurch gekennzeichnet, dass** die Vorrichtung eine rekursives Filter genannte elektronische Einheit (11) aufweist, die für ein auf ein erstes Eingangsbild folgendes zweites Eingangsbild den Wert der ersten Schwelle bestimmt, die an dieses zweite Bild anzuwenden ist, wobei der Wert der ersten Schwelle mindestens vom Wert der ersten Schwelle, der dritten Schwelle und der Zurückweisungsrate des ersten Eingangsbilds abhängt.

**18.** Elektronische Bildverarbeitungsvorrichtung nach einem der vorhergehenden Ansprüche, **dadurch gekennzeichnet, dass** das Endbild in Überlagerung mit einem von einem zweiten Sensor stammenden Bild in ein Anzeigesystem (3) projiziert wird.

**19.** Elektronische Bildverarbeitungsvorrichtung nach Anspruch 18, **dadurch gekennzeichnet, dass** der erste Sensor (2) im nahen Infrarotbereich im Band von 1 bis 2 Mikron anspricht, und der zweite Sensor im mittleren Infrarotbereich im Band zwischen 5 und 20 Mikron anspricht.

20. Anzeigesystem, das mindestens einen Videosensor (2), eine elektronische Bildverarbeitungsvorrichtung (1) und eine Anzeigevorrichtung (3) aufweist, **dadurch gekennzeichnet, dass** das System Mittel zur Lokalisierung der Position und der Ausrichtung des Videosensors im Raum besitzt, wobei die Bildverarbeitung nach einem der vorhergehenden Ansprüche erfolgt, wobei die Lokalisierungsmittel mit der Vorrichtung (1) kommunizieren, wobei das System beweglich gestaltet werden kann.

21. Luftfahrzeug, **dadurch gekennzeichnet, dass** es ein Anzeigesystem nach Anspruch 20 aufweist, wobei die Anzeigevorrichtung ein Head-up-Display ist, wobei die Lichtquellen Lampen einer Landebahn sind.

**Claims**

1. Electronic device for image processing (1) generating an output image from an input image, the two images being composed of pixels, the input image originating from a first video sensor (2) and representative of a scene containing at least one discrete light source, said input image containing a first representation of said discrete light source, the output image comprising a second representation of said discrete light source, **characterized in that** said device comprises at least:

   • an electronic unit (5) for improving contrast making it possible to provide on the basis of the input image an image with better contrast;
   • an electronic unit (6) for selection making it possible to provide on the basis of the image with better contrast a filtered image now containing only at least a first set of pixels whose electronic level is situated above a first threshold, said first set corresponding to the representation of at least one potential light source;
   • an electronic likelihood estimation unit (7), making it possible to provide on the basis of the first set of pixels of the filtered image an estimated image comprising a second set of pixels, said second set corresponding to the representation of estimated light sources, the distributions of the pixels of the representation of the estimated sources corresponding to bidimensional mathematical functions; with each representation of estimated light source there being associated a likelihood probability;
   • an electronic unit (8) for validation providing on the basis of the estimated image the final image, said image containing a representation of the estimated light source if the associated likelihood probability is greater than a second threshold.

2. Electronic device for image processing (1) according to Claim 1, **characterized in that** the level of the first threshold depends at least on said validation unit (8).

3. Electronic device for image processing according to Claims 1 or 2, **characterized in that** said electronic function for improving the contrast of the initial input image comprises at least one matrix filter of CBF (contrast box filter) type applied to each pixel level of the initial input image to obtain the contrasted input image.

4. Electronic device for image processing according to Claim 3, **characterized in that** said matrix is a square matrix of M rows and M columns of elements, the N central elements having one and the same first value, the other $(N - M^2)$ elements of the matrix having one and the same second value equal to said first value multiplied by $N/(M^2-N)$.

5. Electronic device for image processing according to one of the preceding claims, **characterized in that** the electronic likelihood estimator (7) comprises at least one electronic function (71) for recognition of the shape of the representation of the light source making it possible:

   • to compare the levels of the pixels of the first set of the filtered image with calculated levels, emanating from predetermined mathematical functions
   • to provide a probability of presence of the representation of the estimated light source in the input image.

6. Electronic device for image processing according to Claim 5, **characterized in that** the predetermined mathematical functions are bidimensional Gaussians.

7. Electronic device for image processing according to Claim 6, **characterized in that** the recognition function is effected by applications of the method of least squares between the levels of the pixels of the first set and the calculated levels.

8. Electronic device for image processing according to one of the preceding claims, **characterized in that**, the filtered image comprising at least two representations of potential light sources, the electronic likelihood estimator comprises at least one electronic function (72) for recognition of the geometrical disposition of said representations, said function providing a probability of alignment of said representations of the light sources in the input image.

9. Electronic device for image processing according to Claim 8, **characterized in that** when the representations of the potential sources are aligned along at least one straight line, the electronic recognition function comprises at least one function making it possible to effect a radon transform on the pixels of the filtered image.

10. Electronic device for image processing according to one of the preceding claims, **characterized in that**, the representations of the sources being mobile in the input image, the electronic likelihood estimator comprises at least one electronic function (9) for modelling displacement of the representations of the estimated sources.

11. Electronic device for image processing according to Claim 10, **characterized in that** an electronic likelihood estimator (7) comprises at least one electronic function (73) for estimating displacement making it possible, on the basis of the electronic function for modelling displacement of the representations of the estimated sources:

   • for each representation of estimated light source of a first estimated image occupying a first position, to calculate the theoretical displacement of said first position;
   • to calculate a second position occupied by said representation of the estimated light source in a second input image;
   • to compare said second position with the real position of said representation of the light source in said second input image;
   • to provide a probability of displacement of the representation of the source in the input image.

12. Electronic device for image processing according to one of Claims 4 to 11, **characterized in that** the probability of the likelihood of the representation of an estimated light source provided by the electronic unit (8) for validation is equal to the product of the probabilities of presence, of alignment and of displacement of said representation of the light source that are provided by the electronic estimation unit.

13. Electronic device for image processing according to one of the preceding claims, **characterized in that** the electronic unit (8) for validation calculates a rate of rejection of the input image equal to the percentage of representations of estimated sources whose likelihood probability is situated above the second threshold over the total number of representations of estimated sources.

14. Electronic device for image processing according to one of the preceding claims, **characterized in that** the device comprises an electronic histogram unit (10) making it possible to construct the histogram of the pixels of the image with better contrast, said histogram providing the number of pixels corresponding to a given energy level.

15. Electronic device for image processing according to Claim 14, **characterized in that** the electronic histogram unit (10) comprises a function making it possible to determine a third threshold, the level of said third threshold being situated above the mean level of the pixels of the filtered image and below the mean level of the pixels of the representations of the potential light sources.

16. Electronic device for image processing according to Claim 15, **characterized in that**, the histogram being represented in the form of a graph having as abscissa the level of the pixels and as ordinate the number of pixels corresponding to this level, the level of the third threshold corresponds to the level which lies at the largest distance from the straight line passing through the maxima in abscissa and in ordinate of the histogram.

17. Electronic device for image processing according to one of the preceding claims, **characterized in that** the device comprises an electronic unit (11) called a recursive filter which determines for a second input image subsequent to a first input image, the value of the first threshold to be applied to this second image, the value of said first threshold depending at least on the value of the first threshold, of the third threshold and of the rate of rejection of the first input image.

18. Device for image processing according to one of the preceding claims, **characterized in that** the final image is projected in a viewing system (3) superimposed with an image originating from a second sensor.

**19.** Device for image processing according to Claim 18, **characterized in that** the first sensor (2) is sensitive in the near infrared in the 1 to 2 microns band and the second sensor is sensitive in the middle infrared in the 5 to 20 microns bands.

**20.** Viewing system comprising at least one video sensor (2), an electronic device (1) for image processing and a viewing device (3), **characterized in that** said system possesses means for locating the position and orientating the video sensor in space, said image processing being according to one of the preceding claims, said locating means being interfaced with said device (1), it being possible to render said system mobile.

**21.** Aircraft **characterized in that** it comprises a viewing system according to Claim 20, the viewing device being a so-called head-up viewfinder, the light sources being runway lamps.

100

101

31

3

4

2

21

1

**FIG.1**

1

101

21

7

8

31

5

6

**FIG.2**

FIG.3

EP 1 570 433 B1

# FIG.4